Europäisches Patentamt

European Patent Office

Office européen des brevets

(19)

(11) Veröffentlichungsnummer: **0 183 023 B1**

(12) **EUROPÄISCHE PATENTSCHRIFT**

(45) Veröffentlichungstag der Patentschrift: **20.02.91**

(21) Anmeldenummer: **85112879.3**

(22) Anmeldetag: **11.10.85**

(51) Int. Cl.5: **H01S 3/041**, H01S 3/038, H01S 3/0975

(54) Gas-Laser mit Quereinkopplung von Hochfrequenzenergie.

(30) Priorität: **24.11.84 DE 3442898**
**14.09.85 DE 8526361 U**

(43) Veröffentlichungstag der Anmeldung:
**04.06.86 Patentblatt 86/23**

(45) Bekanntmachung des Hinweises auf die
Patenterteilung:
**20.02.91 Patentblatt 91/08**

(84) Benannte Vertragsstaaten:
**CH FR GB IT LI**

(56) Entgegenhaltungen:
EP-A- 0 015 003     EP-A- 0 015 297
EP-A- 0 067 797     EP-A- 0 109 025
EP-A- 0 146 509     EP-A- 0 152 084
DE-A- 3 240 413     GB-A- 2 027 980
US-A- 3 704 428     US-A- 4 169 251
US-A- 4 375 690

Patent Abstracts of Japan, Bd. 9, Nr. 110
(E-314) (1833), 15.05.85 & JP-A-603170

(73) Patentinhaber: **Trumpf GmbH & Co**
**Postfach 1320 Johann-Maus-Strasse 2**
**D-7257 Ditzingen(DE)**

(72) Erfinder: **Klingel, Hans, Dipl.-Ing.(FH)**
**Teckstrasse 91**
**D-7141 Möglingen(DE)**
Erfinder: **Weick, Jürgen, Dipl.-Ing.**
**Eberhardstrasse 17/3**
**D-7144 Saperg(DE)**
Erfinder: **Ackermann, Frank, Dr.-Ing.**
**Hohenzollernstrasse 16**
**Stuttgart 1(DE)**

(74) Vertreter: **Schmid, Berthold et al**
**Patentanwälte Dipl.-Ing. B. Schmid Dr. Ing. G.**
**Birn Falbenhennenstrasse 17**
**D-7000 Stuttgart 1(DE)**

**Beschreibung**

Die Erfindung bezieht sich auf einen Gas-Laser mit einem rohrartigen Körper zur Aufnahme eines entlang dem Laserstrahl strömenden Laser-Gases, wobei sich längs des rohrartigen Körpers einander gegenüberliegend, Elektroden für die Quereinkopplung von Hochfrequenz-Energie befinden gemäß dem Oberbegriff des Anspruchs 1, wie er aus EP-A-0152084 bekannt ist. Beim Betrieb eines derartigen Lasers entsteht Wärme, die möglichst vollständig und rasch abgeführt werden muß. Bei Lasern geringerer Leistung ist das Problem der Wärmeabfuhr naturgemäß geringer als bei einem Laser hoher Leistung, wie er beispielsweise in der Industrie zum Schneiden von Blechen u.dgl. eingesetzt wird. Wird die Wärme nur ungenügend ab geführt, so hat dies eine nicht unerhebliche Leistungsminderung zur Folge.

Es ist bei Gas-Lasern bereits bekannt, die Laserkühlung durch Kühlung des Laser-Gases zu bewirken. Dies bedeutet, daß das Laser-Gas in einem Kühlkreislauf strömt, der teilweise durch den rohrartigen Körper gebildet wird und in dem sich eine entsprechende Kühlvorrichtung befindet.

Die Aufgabe der Erfindung besteht nun darin, einen Gas-Laser der eingangs genannten Art so weiterzubilden, daß er für hohe Leistungen brauchbar ist und mit möglichst geringen Leistungsverlusten auskommt.

Zur Lösung dieser Aufgabe dienen im Anspruch 1 angegbene Merkmale. Bei diesem Gas-Laser wird also das Laser-Gas in der von Lasern anderer Art bekannten Weise mit Hilfe einer Kühlvorrichtung gekühlt, jedoch ist die Gasführung in besonderer Weise ausgebildet. Der Gasstrom im rohrartigen Körper wird gewissermaßen in Teilströme unterteilt, die einzeln aus dem rohrartigen Körper herausgeleitet und wieder eingespeist werden und die aneinandergereiht den gesamten rohrartigen Körper ausfüllen. Weil nunmehr das Gas nur noch eine Teillänge des rohrartigen Körpers durchströmt, kann es sich aufgrund seiner geringeren Verweildauer einerseits nicht so stark erwärmen und andererseits wird dadurch nicht nur an einer Stelle, sondern an mehreren Stellen jeweils gekühltes Laser-Gas eingespeist. Dies hält insgesamt die Temperatur im rohrartigen Körper nieder und bewirkt die angestrebte Leistungssteigerung. Um die Ein- und Auslässe für das Laser-Gas günstig plazieren sowie strömungstechnisch vorteilhaft ausbilden zu können, verwendet man an Stelle zweier sich über die gesamte Länge des rohrartigen Körpers erstreckender Elektroden für die Quereinkopplung von Hochfrequenz-Energie Teilelektroden bzw. Teilelektrodenpaare mit insbesondere gleich langen Teilelektroden, die in Längsrichtung des rohrartigen Körpers mit Abstand aufeinanderfolgend montiert sind. Der gegenseitige Abstand der Teilelektroden richtet sich nach dem Platzbedarf der Ein- und Auslässe für das Laser-Gas und soll zumindet bei einem geraden, langgestreckten, rohrartigen Körper so gering wie möglich sein.

Die Teilströme des Laser-Gases kann man theoretisch einzeln kühlen, jedoch führt dies zu einem verhältnismäßig großen Apparateaufwand und Platzbedarf. Deshalb ist die vorteilhaftere Lösung das Zusammenfassen der Gas-Teilströme, spätestens am Einlaß einer gemeinsamen Kühlvorrichtung. Sinngemäßes gilt für die rückzuführenden gekühlten Teilströme.

Eine besonders bevorzugte Ausführungsform der Erfindung sieht vor, daß jedem Ende des rohrartigen Körpers ein Gas-Einlaß zugeordnet ist. Das einströmende Gas ist, wie gesagt, kühler als das ausströmende und deshalb bewirkt ein Einleiten der kühlen Teilluftströme im Bereich der beiden Enden des rohrartigen Körpers ein Kühlhalten der Rohrenden. Dort befinden sich in bekannter Weise die Laser-Spiegel, nämlich der Endspiegel und ein teildurchlässiger sogenannter Auskoppelspiegel. Die Lagerungen der Spiegel sind wärmeempfindlich und daher ist eine Kühlung des rohrartigen Körpers durch die kühlen Teilluftströme in diesen Bereichen sehr vorteilhaft. Dies bedeutet andererseits, daß sich in Längsrichtung des rohrartigen Körpers gesehen sämtliche Auslässe zwischen den genannten Einlässen befinden. Durch die Unterteilung des rohrartigen Körpers in wenigstens zwei Strömungsabschnitte entstehen zwar zwei Gas-Teilströme, jedoch müssen deshalb nicht notwendigerweise auch entsprechend viele Einlässe und Auslässe vorhanden sein. Bei zwei Gas-Teilströmen reichen beispielsweise zwei Einlässe und ein Auslaß aus. Sinngemäßes gilt für eine höhere Anzahl von Strömungsabschnitten bzw. Teilströmen.

Höhere Laserleistungen führen zu einem längeren rohrartigen Körper. Damit dieser Gas-Laser trotzdem keine unhandliche Länge bekommt, wird in weiterer Ausgestaltung der Erfindung vorgeschlagen, daß der rohrartige Körper eine U-förmige Gestalt aufweist. Sogenannte "gefaltete" Laser sind bei gattungsverschiedenen Ausführungen bereits bekannt. Sie besitzen außer den beiden genannten Endspiegeln zusätzliche Umlenkspiegel. Im Falle der U-Form sind zwei unter 45° zur Längsachse der U-Schenkel geneigte Umlenkspiegel erforderlich. Sie befinden sich am Übergang von den U-Schenkeln zum U-Querstück.

Eine Weiterbildung der Erfindung besteht darin, daß sich sowohl im Bereich der freien als auch der dem U-Querstück zugeordneten U-Schenkelenden je ein Einlaß und im mittleren Bereich der U-Schenkel je ein Auslaß befinden. Das bedeutet, daß die Teilströme jedes U-Schenkels gegeneinanderströmen und sie über einen gemeinsamen Auslaß aus dem rohrartigen Körper herausgeführt werden. Demnach reichen also bei dieser Ausführungsform vier Einlässe und zwei Auslässe aus, die gewissermaßen als Doppelauslässe ausgebildet sind. Selbstverständlich ist es auch denkbar, zwei möglichst nahe beieinanderliegende Einzelauslässe vorzusehen, jedoch wird der Ausbildung mit den "Doppelauslässen" der Vorzug gegeben. Wenn jeder U-Schenkel nicht in zwei, sondern in drei oder mehr Abschnitte unterteilt ist, so gelten die vorstehenden Ausführungen auch für diese Ausführungsformen sinngemäß.

Gemäß einer weiteren Ausbildung der Erfindung wird vorgeschlagen, daß die Einlässe der freien U-Schenkelenden und die Einlässe der dem U-Querstück zugeordneten U-Schenkenden sowie die beiden Auslässe bzw. Doppelauslässe strömungsmäßig zusammengefaßt oder jeweils miteinander verbunden sind, beispielsweise über kurze Kanalstücke. Auf diese Weise verringert sich bei einer Ausführungsform mit vier Strömungsabschnitten die Zahl der Zu-und Ableitungen zur bzw. aus der Kühlvorrichtung auf eine Zuleitung und zwei Rückleitungen bzw. eine gegabelte Rückleitung. Die Zahl dieser Leitungen nimmt selbstverständlich zu, wenn die Unterteilung in sechs, acht und mehr Strömungsabschnitte vorgenommen wird. Sinngemäß werden aber auch bei solchen Ausführungsformen die Ein- und Auslässe gemäß der vorstehend beschriebenen Ausbildung der Erfindung zusammengefaßt. Im übrigen könnte die gemeinsame Einspeisung des gekühlten Gasstromes für die dem U-Querstück zugeordneten Abschnitte auch im U-Querstück selbst erfolgen.

Eine andere Variante der Erfindung kennzeichnet sich dadurch, daß alle Teilelektroden mit einem gemeinsamen Hochfrequenz-Generator verbunden sind. Ebenso wie die Teilluftströme werden demnach auch die Stromkreise für die Teilelektroden so zusammengefaßt, daß trotz der Unterteilung der Elektroden in Teilelektroden nach wie vor nur ein Generator erforderlich ist. Des weiteren ist es besonders vorteilhaft, daß die Teilströme des Laser-Gases den rohrartigen Körper mit hoher Geschwindigkeit, von mindestens 50 m/sek. durchströmen, d.h. es handelt sich um einen schnellgeströmten Laser. Wie eingangs bereits erläutert wurde, ist es erforderlich, die Erwärmung des Gases im rohrartigen Körper auf ein Minimum zu beschränken und die aufgenommene Wärme möglichst rasch abzuziehen. Durch die Teilströme erreicht man bei einer bestimmten Strömungsgeschwindigkeit eine kurze Verweildauer im rohrartigen Körper und diese wird zu einem Minimum, wenn man die Strömungsgeschwindigkeit besonders hoch wählt.

Bei der üblichen Anordnung der Elektrodenpaare jeweils in gleicher Richtung erhält man eine ungleichmäßige Verteilung der Energie im Strahl, was sich einerseits nachteilig für die Fokussierbarkeit auswirkt und andererseits den Wirkungsgrad herabsetzt.

Eine weitere Aufgabe der vorliegenden Erfindung ist darin zu sehen, einen Gaslaser zu schaffen, der eine möglichst gleichmäßige Energieverteilung im Gasstrahl aufweist. Dies wird dadurch erreicht, daß die Elektrodenpaare bzw. -abschnitte derselben in Umfangsrichtung des rohrartigen Körpers versetzt zueinander angeordnet sind, wie es im kenuzeichnenden Teil des Anspruchs 1 angegeben ist.

Um die Form der Energieverteilung im Gasstrahl beeinflussen zu können und beispielsweise statt einer Spitzen- eine Keilform zu erhalten,ist nach einem weiteren kenuzeichnenden Merkmal der Erfindung mindestens ein Elektrodenpaar oder ein Abschnitt desselben verdrehbar gegenüber dem Gasstrom bzw. Laserstrahl angeordnet. Je nach der gewünschten Energieform kann man dann eine Verdrehung um kleinere oder größere Winkelgrade vornehmen. Eine besonders einfach Art der Drehanordnung ergibt sich, wenn man die Elektrodenpaare oder ihre Abschnitte fest mit dem Gasrohr verbindet und dieses in mehrere Abschnitte unterteilt, von denen mindestens einer drehbar gelagert ist. Dabei ist es zweckmäßig, die drehbaren Elektroden bzw. die Rohrabschnitte mit einer Verstellvorrichtung zu verbinden, so daß die Verstellung von einem Steuergerät oder von einer Programmsteuerung vorgenommen werden kann. Um während des Arbeitsvorganges ein ungewolltes Verdrehen zu verhindern, ist außerdem noch eine Arretiervorrichtung vorgesehen. In JP-A-603170 ist ein HF-angeregter Gas-Laser mit um das Rohr spiralförmig gewundenen oder in Umfangsrichtung des Rohres versetzlen Elektrodenpaaren beschrieben.

Die Zeichnung zeigt:

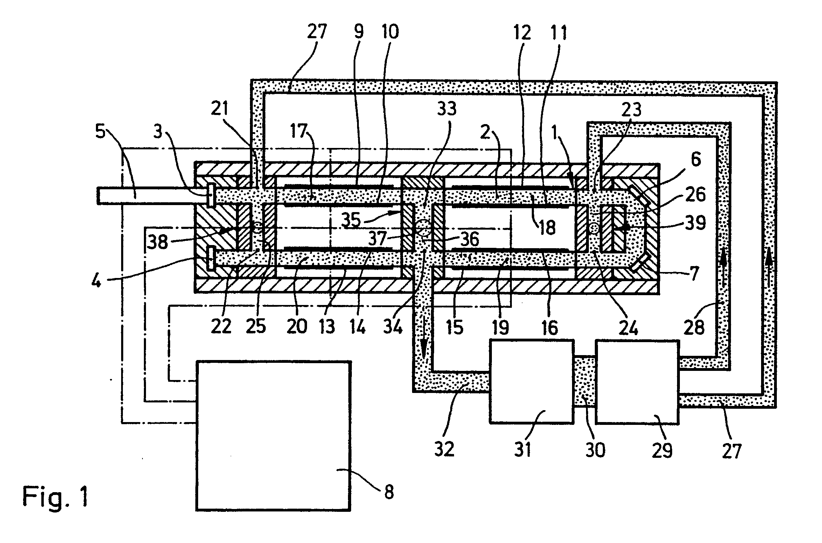

Fig. 1    eine schematische Darstellung bei einem Längsschnitt durch den rohrartigen Körper,

Fig. 2    eine Darstellung gemäß Fig. 1 als Ausführungsform der Erfindung,

Fig. 3    mehrere Querschnitte der einzelnen Elektrodenabschnitte,

Fig. 4    einen Querschnitt durch einen Drehantrieb eines Rohrabschnittes.

Der Gas-Laser besitzt einen rohrartigen Körper 1 mit vorzugsweise kreisförmigem Innen- und Außenquerschnitt, in welchem sich sowohl das Laser-Gas2 -vorzugsweise $CO_2$-Gas- als auch der Laserstrahl befinden. An den beiden enden sind die Spiegeleinheiten 3 bzw. 4 angebracht. Letzterer ist mit dem Endspiegel ausgestattet, während sich an der Spiegeleinheit 3 ein teildurchlässiger sogenannter Auskoppelspiegel befindet. Über diesen tritt der erzeugte Laserstrahl aus und er gelangt über eine Laserzuführung 5 zu einer Bearbeitungsstelle od. dgl. Vorzugsweise ist der rohrartige Körper 1 zu einem U geformt, wodurch sich seine Länge auf etwa die Hälfte reduziert. Dies macht allerdings die Anbringung zweier Umlenkspiegel 6 und 7 für den Laserstrahl erforderlich.

Die notwendige Energie zur Erzeugung des Laserstrahls wird dem rohrartigen Körper über zwei einander gegenüberliegende Elektroden zugeführt, weswegen es sich um einen Gas-Laser mit Quereinkopplung handelt. Der Laser wird mit Hochfrequenz-Energie betrieben, die von einem Hochfrequenzgenerator 8 stammt.

Gemäß einem Merkmal der Erfindung sind die beiden Elektroden, die sich, wie gesagt, in Längsrichtung des rohrartigen Körpers erstrecken und diesen jeweils auf einem Teilumfang umfassen, in Teilelektroden 9, 10; 11, 12; 13, 14; 15, 16 unterteilt. Dabei bilden jeweils die gleich langen, gleich großen sowie gleich geformten Teilelektroden 9 und 10 bzw. 11 und 12 bzw. 13 und 14 bzw. 15 und 16 ein Teilelektrodenpaar. Alle Teilelektroden bzw. Teilelektrodenpaare sind über strichpunktiert dargestellten Leitungen mit einem einzigen gemeinsamen Hochfrequenz-Generator 8 verbunden.

Nicht nur die Elektroden, sondern auch der Laser-Gasstrom, der in bekannter Weise aus dem rohrartigen Körper herausgeleitet und außerhalb gekühlt wird, ist unterteilt und zwar in aufeinanderfolgende Teilströme 17, 18, 19 und 20. Dies bedeutet, daß das Laser-Gas nur jeweils über eine Teillänge des rohrartigen Körpers strömt und dann zur Kühlung herausgeleitet wird. Um diese Unterteilung des Laser-Gasstromes vornehmen zu können, besitzt der rohrartige Körper mehrere Gas-Ein- und- Auslässe. Zu jedem Teilstrom gehört an sich ein Einlaß und ein Auslaß, jedoch kann man diese zumindest teilweise zusammenfassen. Weil im Bereich der Spiegel und zwar sowohl der Spiegeleinheiten 3 und 4 als auch der Umlenkspiegel 6 und 7 erwärmtes Laser-Gas unerwünscht ist, da sich dies nachteilig auf den Spiegel und/oder seine Justierung auswirkt, wird gemäß dem Ausführungsbeispiel vorgeschlagen, daß sich sowohl im Bereich der Spiegeleinheiten 3 und 4 als auch der Umlenkspiegel 6 und 7 je ein Einlaß 21, 22, 23, 24, befindet. Dabei sind in bevorzugter Weise die Einlässe 21 und 22 einerseits und die Einlässe 23 und 24 andererseits über einen Kanal 25 bzw. 26 od. dgl. strömungsmäßig miteinander verbunden. Zu jedem führt eine Zuführungsleitung 27 bzw. 28, die mit einem oder auch zwei getrennen Auslässen eines Gebläses 29 verbunden sind, welches das gekühlte Gas gegebenenfalls über eine Leitung 30 aus einer Laser-gas-Kühlvorrichtung 31 ansaugt. Das erwärmte Laser-Gas strömt dieser Kühlvorrichtung, vorzugsweise über eine gemeinsame Zuführungsleitung 32 zu.

Die Auslässe der Teilströme 17 und 18 sind zu einem gemeinsamen Auslaß 33 zusammengefaßt. Analog ist ein gemeinsamer Auslaß 34 für die Teilströme 19 und 20 vorgesehen. In einer Abführeinrichtung 35 sind die beiden "Doppel-Auslässe" 33 und 34 über einen symbolisch eingezeichneten Kanal 36 miteinander verbunden, der seinerseits mit der gemeinsamen Zuführungsleitung 32 in Strömungsverbindung steht. Zweckmäßigerweise mündet diese, entgegen der schematischen Darstellung, etwa an der durch einen Kreis 37 markierten Stelle. Sinngemäßes gilt auch für die Kanäle 25 und 26. Der Abführeinrichtung 35 entsprechen, vorzugsweise gleich ausgebildete Zuführungseinrichtungen 38 und 39 im Bereich der Kanäle 25 und 26.

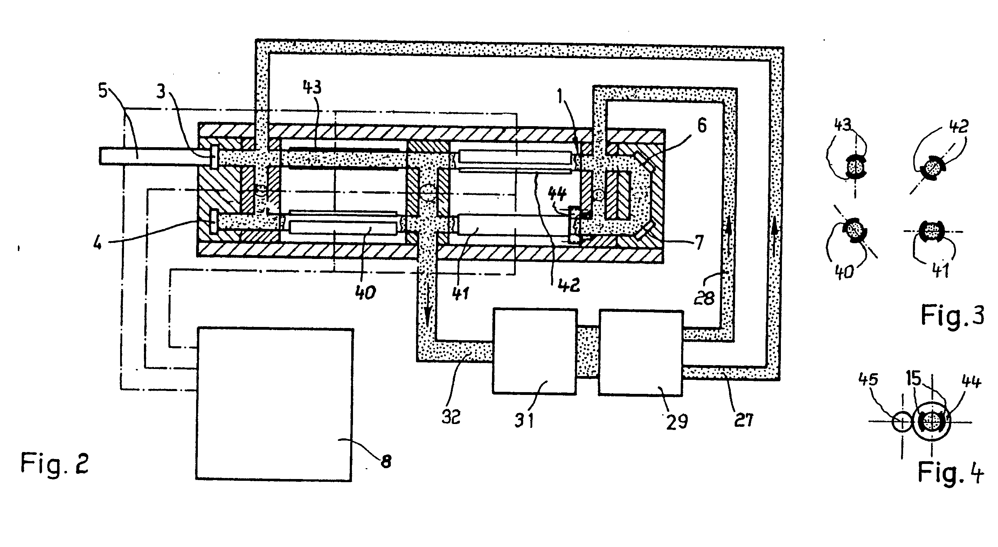

Im Ausführungsbeispiel gemäß Fig. 2 sind die Elektrodenpaare 40 bis 43, um eine möglichst gleichmäßige Verteilung der Energie im Gasstrom zu erhalten, in Umfangsrichtung des rohrartigen Körpers 1 gegeneinander versetzt angeordnet, wie Fig. 3 erkennen läßt. Um die Winkellage der Elektrodenpaare zueinander beliebig einstellen zu können, sind -wie aus der Zeichnung nicht ersichtlich ist- die Rohrabschnitte, auf denen sich die Elektrodenpaare befinden, drehbar gegenüber den anderen Rohrteilen gelagert, wobei die Elektrodenpaare fest auf den zugehörigen Rohrabschnitten befestigt sind. Fig. 4 zeigt, daß an einem Rohrabschnitt ein Zahnrad 44 angebracht ist, in welches ein Ritzel 45 eingreift. Dies ist mit einer nicht dargestellten Verstelleinrichtung verbunden, die ihrerseits an eine Programmsteuerung od. dgl. angeschlossen sein kann.

## Ansprüche

1. Gas-Laser mit einem rohrartigen Körper zur Aufnahme eines entlang dem Laserstrahl strömenden Lasergases, wobei sich längs des rohrartigen Körpers, einander gegenüberliegend, Elektroden für die Quereinkopplung von Hochfrequenz-Energie befinden und sich zur Unterteilung des Lasergasstromes in mehrere aufeinanderfolgende Teilströme (17, 18, 19, 20) am rohrartigen Körper (1) mehrere Gas-Ein- und -Auslässe (21 bis 24; 33, 34) befinden, wobei der rohrartige Körper (1) durch die Ein- und Auslässe in eine gerade Anzahl von Strömungsabschnitten unterteilt ist und wenigstens zwei, vorzugsweise aber vier, Strömungsabschnitte vorhanden sind, und daß die Elektroden in Teilelektroden (9 bis 16) unterteilt sind, die sich in Längsrichtung des rohrartigen Körpers (1) hintereinander befinden, wobei jedem Teilstrom (17 bis 20) ein Teilelektrodenpaar (40,41,42,43) zugeordnet ist, daß außerdem jeder Teilstrom je eine oder eine gemeinsame Kühlvorrichtung (8) durchströmt, dadurch gekennzeichnet, daß die Teilelektrodenpaare (40,41,42,43)oder Abschnitte derselben in Umfangsrichtung des rohrartigen Körpers (1) versetzt zueinander angeordnet sind, wobei mindestens ein Teilelektrodenpaar (40 bis 43) bzw. ein Abschnitt desselben verdrehbar gegenüber dem Gasstrom bzw. Laser strahl angeordnet ist.

2.  Laser nach Anspruch 1, dadurch gekennzeichnet, daß die Teilelektrodenpaare (40 bis 43) bzw. deren Abschnitte fest mit dem rohrartigen Körper (1) verbunden sind und dieser in mehrere Rohrabschnitte unterteilt ist, von denen mindestens einer drehbar gelagert ist.

3.  Laser nach Anspruch 1 oder 2, dadurch gekennzeichnet, daß die drehbar gelagerten Teilelektrodenpaare (40 bis 43) bzw. die die Teilelektrodenpaare tragenden Rohrabschnitte mit einer Verstelleinrichtung (44, 45) verbunden sind.

4.  Laser nach einem der Ansprüche 1 bis 3, dadurch gekennzeichnet, daß für die drehbaren Teilelektrodenpaare bzw. die sie tragenden drehbaren Rohrabschnitte eine Arretiervorrichtung vorgesehen ist.

5.  Laser wenigstens nach einem der vorhergehenden Ansprüche, bei welchem jedem Ende des rohrartigen Körpers (1) ein Gas-Einlaß (21, 22) zugeordnet ist, dadurch gekennzeichnet, daß der rohrartige Körper (1) eine U-förmige Gestalt aufweist und sich sowohl im Bereich der freien als auch der dem U-Querstück zugeordneten U-Schenkelenden je ein Einlaß (21, 22, 23, 24) und im mittleren Bereich der U-Schenkel je ein Auslaß (33, 34) befinden.

6.  Laser nach Anspruch 5, dadurch gekennzeichnet, daß die Einlässe (21, 22) der freien U-Schenkelenden und die Einlässe (23, 24) der dem U-Querstück zugeordneten U-Schenkelenden sowie die beiden Auslässe (33, 34) strömungsmäßig zusammengefaßt oder jeweils miteinander verbunden sind.

## Claims

1.  Gas laser with a tubular body for receiving a laser gas which flows along the laser beam, there being situated along the tubular body, lying opposite one another, electrodes for the transverse coupling of high frequency energy and in order to subdivide the laser gas flow into a plurality of successive partial flows (17, 18, 19, 20) there being situated at the tubular body (1) several gas inlets and outlets (21 to 24; 33, 34), the tubular body (1) being subdivided by means of the inlets and outlets into an even number of flow sections and at least two, preferably, however, four flow sections being available; and the electrodes are subdivided into partial electrodes (9 to 16) which are situated behind one another in the longitudinal direction of the tubular body (1), a partial electrode pair (40, 41, 42, 43) being associated with each partial flow (17 to 20); in addition, each partial flow flows through in each case one or one common cooling device (8), characterized in that the partial electrode pairs (40, 41, 42, 43) or sections of the same are disposed offset to one another in the circular direction of the tubular body (1) at least one partial electrode pair (40 to 43) or a section of the same being disposed in a rotatable manner with respect to the gas flow or the laser beam.

2.  Laser according to claim 1, characterized in that the partial electrode pairs (40 to 43) or the sections thereof are connected in a rigid manner to the tubular body (1) and the latter is subdivided into several tubular sections of which at least one is rotatable.

3.  Laser according to claim 1 or 2, characterized in that the partial electrode pairs (40 to 43) which are housed in a rotatable manner or the tubular sections which carry the partial electrode pairs are connected to an adjusting device (44, 45).

4.  Laser according to one of claims 1 to 3, characterized in that a stopping device is provided for the rotatable partial electrode pairs or the rotatable tubular sections which carry them.

5.  Laser according to at least one of the preceding claims in the case of which a gas inlet (21, 22) is associated with each end of the tubular body (1), characterized in that the tubular body (1) is U-shaped and there is situated both in the area of the free U-shaped leg ends as well as the U-shaped leg ends which are associated with the U-shaped transverse part an inlet (21, 22, 23, 24) and there is situated in the centre area of the U-shaped leg an outlet (33, 34).

6.  Laser according to claim 5, characterized in that the inlets (21, 22) of the free U-shaped leg ends and the inlets (23, 24) of the U-shaped leg ends which are associated with the U-shaped transverse part as well as both outlets (33, 34) are combined or in each case are connected to one another in accordance with the flow.

## Revendications

1. Laser à gaz comprenant un corps tubulaire destiné à recevoir un gaz laser qui s'écoule le long du rayon laser, cependant que des électrodes destinées au couplage transversal d'énergie à haute fréquence se trouvent en face l'une de l'autre le long du corps tubulaire, que plusieurs entrées et sorties de gaz (21 à 24 ; 33, 34) se trouvent sur le corps tubulaire (1) pour diviser le courant de gaz laser en plusieurs courants partiels consécutifs (17, 18, 19, 20), que le corps tubulaire (1) est divisé par les entrées et les sorties en un nombre pair de sections d'écoulement et qu'au moins deux sections d'écoulement, mais de préférence quatre, sont présentes, et que les électrodes sont divisées en électrodes partielles (9 à 16) qui se trouvent les unes derrière les autres dans la direction longitudinale du corps tubulaire (1), chaque courant partiel (17 à 20) étant associé à une paire d'électrodes partielles (40, 41, 42, 43), et qu'en outre chaque courant partiel s'écoule à travers un dispositif de refroidissement (8) à chaque fois ou à travers un dispositif de refroidissement commun, caractérisé par le fait que les paires d'électrodes partielles (40, 41, 42, 43), ou des sections de celles-ci, sont disposées en étant décalées l'une par rapport à l'autre dans la direction de la périphérie du corps tubulaire (1), au moins une paire d'électrodes partielles (40 à 43) ou une section de celle-ci, respectivement, étant disposée en pouvant tourner par rapport au courant de gaz ou au rayon laser, respectivement.

2. Laser selon la revendication 1, caractérisé par le fait que les paires d'électrodes partielles (40 à 43) ou leurs sections, respectivement, sont liées rigidement au corps tubulaire (1), et que celui-ci est divisé en plusieurs sections de tube dont l'une au moins est montée tournante.

3. Laser selon la revendication 1 ou 2, caractérisé par le fait que les paires d'électrodes partielles montées tournantes (40 à 43) ou les sections de tube qui portent les paires d'électrodes partielles, respectivement, sont reliées à un dispositif de réglage (44, 45).

4. Laser selon l'une des revendications 1 à 3, caractérisé par le fait qu'un dispositif de blocage est prévu pour les paires d'électrodes partielles tournantes ou les sections de tube tournantes qui les portent, respectivement.

5. Laser selon l'une au moins des revendications précédentes, dans lequel une entrée de gaz (21, 22) est associée à chaque extrémité du corps tubulaire (1), caractérisé par le fait que le corps tubulaire (1) présente une forme en U, qu'une entrée (21, 22, 23, 24) se trouve à chaque fois, aussi bien dans la région des extrémités libres des ailes du U que de celles qui sont associées à la partie transversale du U, et qu'une sortie (33, 34) se trouve à chaque fois dans la région centrale des ailes du U.

6. Laser selon la revendication 5, caractérisé par le fait que les entrées (21, 22) des extrémités libres des ailes du U et les entrées (23, 24) des extrémités des ailes du U qui sont associées à la partie transversale du U, ainsi que les deux sorties (33, 34), sont assemblées ou reliées entre elles à chaque fois en ce qui concerne l'écoulement.

Fig. 1

Fig. 2

Fig. 3

Fig. 4

EP 0 183 023 B1